# EUROPÄISCHE PATENTSCHRIFT

(11) **EP 0 478 647 B1**
(45) Veröffentlichungstag und Bekanntmachung des Hinweises auf die Patenterteilung: **26.05.1993**
(21) Anmeldenummer: 90909682.8
(22) Anmeldetag: 15.06.1990
(51) Int. Cl.: G11B 15/675, G11B 31/00, G11B 25/06

(54) **VIDEORECORDER**
VIDEO RECORDER
MAGNETOSCOPE

(30) Priorität: 19.06.1989 DE 3919984
(43) Veröffentlichungstag der Anmeldung: 08.04.1992
(73) Patentinhaber: DEUTSCHE THOMSON-BRANDT GMBH, 78048 Villingen-Schwenningen (DE)
(72) Erfinder: GEIGER, Erich, D-7731 Unterkirnach (DE); SCHANDL, Hartmut, A-1100 Wieningen (AT)
(74) Vertreter: Einsel, Robert, Dipl.-Ing.
(86) Internationale Anmeldenummer: EP9000935
(87) Internationale Veröffentlichungsnummer: WO9016067

(56) Entgegenhaltungen:
- EP-A- 146 311
- EP-A- 149 101
- EP-A- 310 114
- EP-A- 360 645
- DE-U- 8 525 901
- US-A- 3 766 327
- US-A- 3 934 841

## Beschreibung

Die Erfindung betrifft einen Videorecorder mit einem Gehäuse, das eine klappbare Wandung aufweist, die in einer Endstellung das Gehäuse verschließt und in einer anderen Endstellung ein Kassettenfach für eine Videokassette freigibt. Aus der US-A-3,766,327 ist ein Laufwerk mit einer klappbaren Aufnahmevorrichtung für eine Magnetbandkassette bekannt, mittels welcher die Kassette auf dem Laufwerk positioniert wird. Aus der US-A-3,934,841 ist ein Magnetbandgerät mit dem Merkmalen im Oberbegriff des Anspruchs 1, also mit einem klappbaren Gehäuseteil bekannt, das Antriebsmittel zum wechselweisen Antrieb der Magnetbandwickel einer Kassette enthält und zum Aufnahme-/ Wiedergabebetrieb aus der offenen Endstellung heraus zusammen mit der Kassette in das Gehäuse eingeklappt wird.

Ein bevorzugtes Anwendungsgebiet von Videorecordern sind Videorecorder mit eingebauter Videokamera. Sie werden als Camcorder bezeichnet.

Derartige Camcorder sind verhältnismäßig voluminös, weil sie zusätzlich zum Videorecorder auch die Optik, Sucher, Schaltungen und Bedienungseinrichtungen, sowie den für die Videokassette erforderlichen Raum enthalten.

Der Erfindung liegt die Aufgabe zugrunde, einen Videorecorder, insbesondere ein Camcorder konstruktiv so auszubilden, daß sein Volumen klein bemessen werden kann.

Diese Aufgabe wird durch die im Anspruch 1 beschriebene Erfindung gelöst. Vorteilhafte Weiterbildungen der Erfindung sind in den Unteransprüchen beschrieben.

Bei der erfindungsgemäßen Lösung wird die angestrebte Volumenverkleinerung durch konstruktive Kombination von Gehäuse, Wandung und Kassetten-Aufnahmefach erzielt. Die Kassette taucht nur zum Teil in ein Kassettenfach ein, dessen Öffnungsquerschnitt bei einer ersten konstruktiven Kombination von Gehäuse, Wandung und Kassetten-Aufnahmefach näherungsweise dem Kassettenquerschnitt und in einer zweiten konstruktiven Kombination näherungsweise dem doppelten Kassettenquerschnitt entspricht. Eine Wandung des Gehäuses erfüllt mehrere Funktionen. In der Ruhesteilung schließt es das Gehäuse als einen wirksamen Schutz, z. B. gegen Staub, dicht ab. Dabei wird insbesondere das Fach für die Aufnahme der Videokassetten dicht abgeschlossen. In der anderen Funktion wird indessen das Aufnahmefach zum Einsetzen und Laden der Videokassette freigegeben. In dieser anderen Funktion ist die Wandung so geklappt, daß sie neben dem Fach eine stabile Lage einnimmt und das Fach verlängert. An der dem Fach zugewandten Seite der klappbaren Wandung sind Antriebsorgane (Antriebsdorne) für die Bandwickel, ein Stift zum Lösen von in der Kassette befindlicher Bandwickelbremsen und ein als Abtaster ausgebildeter Sensor für gegen Überspielung gesicherte Videokassetten so angeordnet, daß sie bei eingesetzter Kassette in entsprechende Öffnungen der Videokassette eingreifen. Dadurch wird erreicht, daß das Kassettenfach eine nur geringe Bautiefe haben muß und die Kassette nur geringfügig in das Fach eintaucht. Es ist also nicht notwendig, das Gehäuse um wenigstens das Volumen der Kassette zu vergrößern.

Die Erfindung wird im folgenden anhand der Zeichnungen an Ausführungsbeispielen erläutert. Darin zeigen
- Fig. 1: einen Videorecorder mit der verschließbaren Öffnung in der aufrechten Endstellung der klappbaren Wandung und darüber sichtbarer Kassette,
- Fig. 2: denselben Videorecorder mit der eingesetzten Kassette,
- Fig. 3: denselben Videorecorder mit dem verschlossenen Fach,
- Fig. 4a: einen Videorecorder gemäß Fig. 1-3 in einer schematischen Schnittdarstellung, in der eine Kassetten-Ladeeinrichtung und Antriebselemente zur Übertragung von Antriebskräften für die Bandwickel der Kassette erkennbar sind,
- Fig. 4b: die Kassetten-Ladeeinrichtung gemäß Fig. 4a,
- Fig. 5: einen Videorecorder mit einer weiteren klappbaren Wandung, an deren Innenseite ein Fernsehbildschirm angeordnet ist.

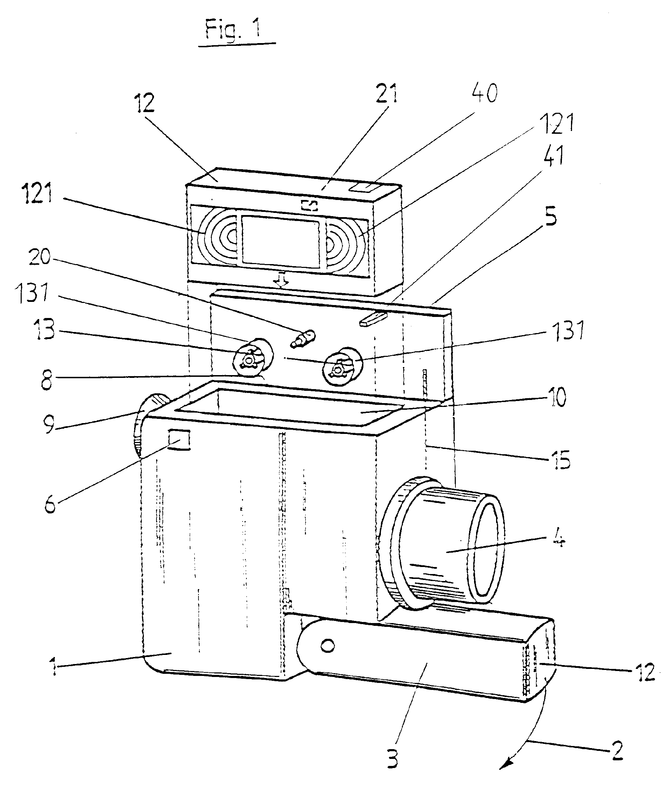

Fig. 1-3 zeigt einen Videorecorder (Camcoder) mit eingebauter Videokamera mit einem Gehäuse 1, einem in Richtung 2 herausklappbaren Tragegriff 3, einem Objektiv 4 und einer das obere Gehäuseteil bildenden herausklappbaren Wandung 5. Am hinteren Ende des Gehäuses 1 befindet sich das Okular 9 eines Suchers, mit dem das Bild eines eingebauten Monitors 9 betrachtet werden kann. Die Wandung 5 hat in einer geöffneten und in einer geschlossenen Position, beide im folgenden Endsteliungen genannt, jeweils eine stabile Lage. Die Wandung 5 ist mit dem Gehäuse 1 durch ein Scharnier 8 verbunden. Es ist zwischen den zwei Endstellungen klappbar.

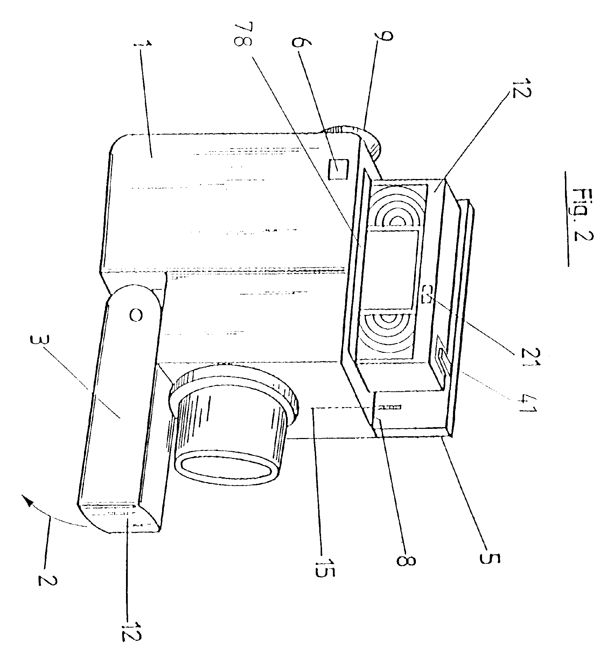

In Fig. 1 und Fig. 2 ist die Wandung 5 in die geöffnete Endstellung geklappt dargestellt.

Die geöffnete Endstellung der Wandung 5 läßt in Fig. 1 die Innenseite der Wandung 5 sowie ein sonst verdecktes Kassettenfach 10 erkennen. In dieser Endstellung befindet sich ein senkrecht zum Kassettenfach 10 stehender Antrieb für die beiden Bandwickel 121 einer über dem Kassettenfach 10 angedeuteten Kassette 12 in der richtigen Lage in Bezug auf die Antriebsseite der Kassette 12. Die Antriebsseite weist bekannter Weise entsprechende Antriebsöffnungen auf, durch die die Bandwickel 121 mit auf Wickeltellern 131 gelagerten Antriebsdornen 13 in Eingriff gebracht werden können. Die beiden mit je einem Antriebsdorn 13 versehenen Wickelteller 131 sind an der Innenseite der Wandung 5 erkennbar. Die beiden Wickelteller 131 sind bekannter Weise für die beiden Wickelrichtungen durch ein Schwenkgetriebe wechselweise antreibbar und anderseits zum Stoppen des jeweiligen Wickelvorganges durch Bremsvorrichtungen abbremsbar.

Die geöffnete Endstellung der Wandung 5 stellt also die Arbeitsstellung des Recorders dar, die für den Kassettenbetrieb bzw. Aufnahme- und Wiedergabebetrieb vorgesehen ist. Ein Stift 20 an der Wandung 5 dient zum Lösen in der Kassette 12 befindlicher Bandwickelbremsen, indem dieser in eine Kassettenaussparung. 21 eingreift und darin einen Hebel zur Bremsenentriegelung betätigt, wenn die Kassette 12 nach dem Einstecken in das Kassettenfach 10 auf die Wandung 5 zu in die in Fig. 2 erkennbare Spielposition bewegt (geladen) wird. Mittels eines als Tastschalter ausgebildeten Sensors 41 an der Wandung 5 wird dabei eine am Kassettengehäuse ausgebildete Aufnahmesperrvorrichtung 40 abgefragt, ob die Kassette 12 vor Überspielung geschützt werden muß.

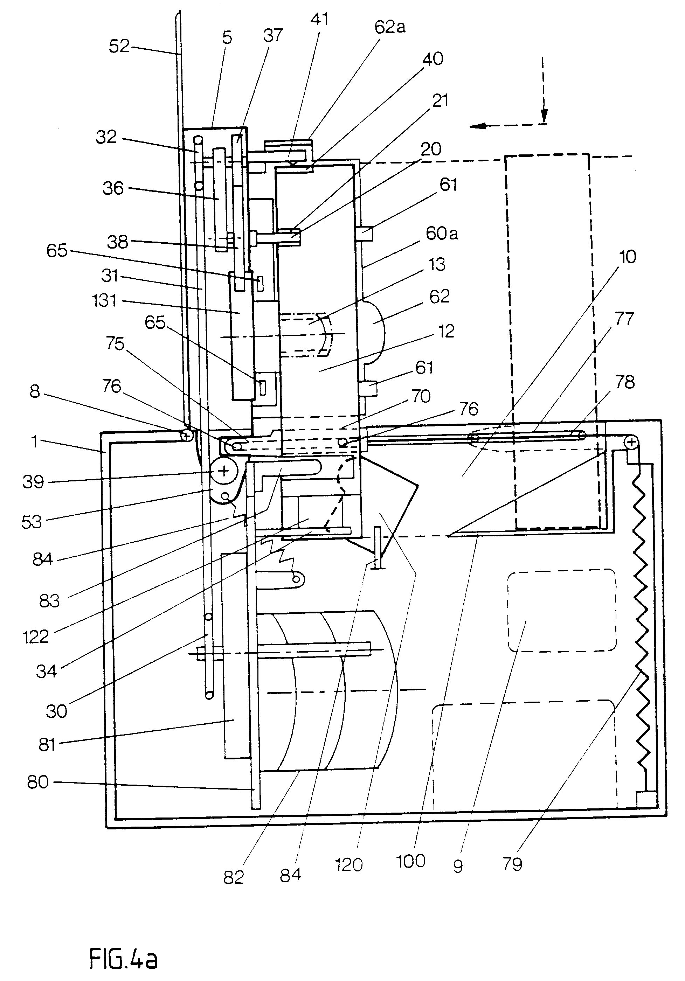

Die Innenseite der aufgeklappten Wandung 5 dient also zur Halterung des Stiftes 20, des Sensors 41, des Schwenkgetriebes und der beiden mit Bremsvorrichtungen versehenen Wickelteller 131. Der Antrieb für die Wickelteller 131, der vom Recorderteil im Gehäuse 1 elektronisch gesteuert wird, erfolgt entweder durch einen gesonderten Antrieb (Motor) in der Wandung 5, oder von einem im Gehäuse 1 gelagerten Motor aus über ein mechanisches Umlenkgetriebe, das der Drehbewegung der Wandung 5 beim Aufklappen in die geöffnete Endstellung folgen kann. Ein solches Umlenkgetriebe kann im einfachsten Fall z.B. ein in Achsrichtung des Scharniers 8 angeordnetes Zahnrad sein oder aus Umlenkrollen 39 bei einem Riementrieb bestehen. Ein derartiger Riementrieb ist in Fig. 4a dargestellt.

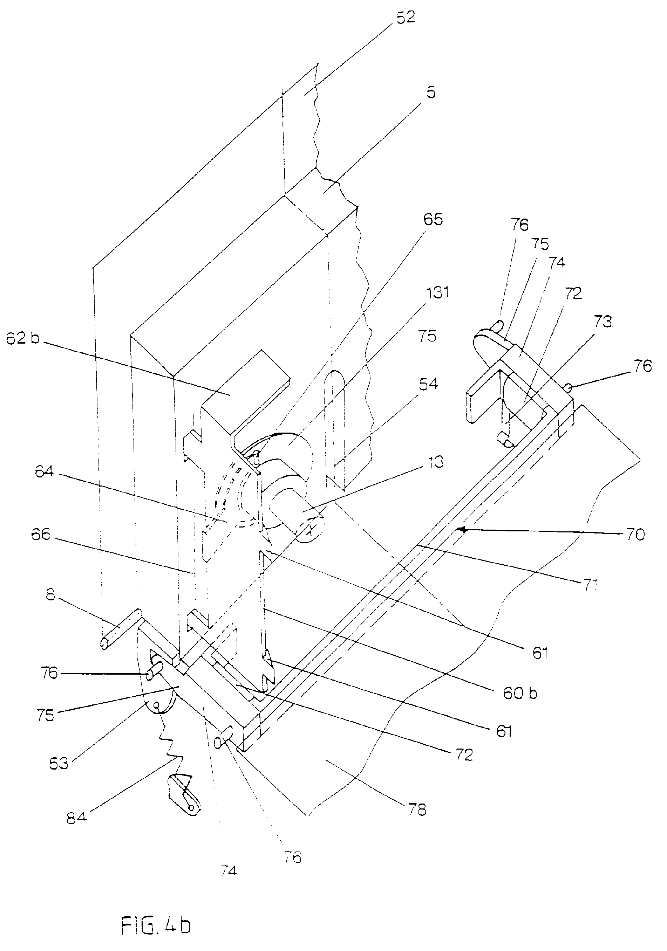

Um die Kassette 12 in der Spielposition gegen Verkippen gegenüber der Wandung 5 zu schützen, ist die Kassette 12 von sogenannten Rastelementen (Rastnasen) 61 zweier auf der Innenseite der Wandung 5 angeordneter Seitenflügel 60a und 60b seitlich umfaß- bzw. arretierbar. Der dem Objektiv 4 zugewandte Seitenflügel 60a ist in Fig. 4a erkennbar. Der gegenüberlieqende, dem Okular 9 bzw. dem eingebauten Monitor zugewandte Seitenflügel 60b ist in Fig. 4b erkennbar. Beide Seitenflügel 60a und 60b weisen eine rechtwinkelig nach innen abgebogene Verlängerung 62a; 62b auf, wobei in der Verlängerung 62a des Seitenflügels 60a eine Nut ausgebildet ist, durch die der als Tastschalter ausgebildete Sensor 41 abgedeckt und somit vor unbeabsichtigter Berührung geschützt wird. Um die Kassette 12 laden oder entladen zu können, ist jeder der beiden Seitenflügel 60a, 60b um eine zur jeweiligen seitlichen Außenkante der Wandung 5 parallel verlaufende, auf der Innenseite der Wandung 5 liegende Achse in einem vorgegebenen Winkelbereich nach außen hin schwenkbar. Zur Rückschwenkung beider Seitenflügel 60a, 60b in ihre im wesentlichen aufrechte Lage, sind beide an je einem die jeweilige Rückschwenkung bewirkenden Kraftspeicher angekuppelt. Die Rastnasen 61 sind so abgeschrägt, daß beide Seitenflügel 60a, 60b von der Kassette 12 beim Laden weggeschwenkt werden können. Um die Kassette 12 mühelos entladen zu können, sind beide Seitenflügel 60a, 60b entsprechend mechanisch miteinander verkuppelt und in Höhe der Antriebsdorne 13 mit je einem nach innen gerichteten Auswurfarm 64 versehen. Ein derartiger Auswurfarm 64 ist in Fig. 4b erkennbar. Mittels dieser gleichartigen Auswurfarme 64 ist die Kassette 12 von der Wandung 5 wegdrückbar, indem diese die Kassette 12 an ihrer Antriebsseite entsprechend angreifen, sobald die Rastnasen 61 die Kassette 12 freigeben. An der gabelförmigen Ausbildung der Auswurfarme 64 sind Gleitrollen 65 angebracht, die hierbei zur Reibungsverringerung dienen. Die Kassette 12 ist dann greifbar und aus dem Kassettenfach 10 herausziehbar. Die für beide Auswurfarme 64 erforderlichen Kräfte sind z. B. von einem manuell zu betätigenden Griff 62 aus übertragbar, der an dem Seitenflügel 60a ausgebildet ist.

Das Kassettenfach 10 ist so breit ausgebildet, daß die Kassette 12 frei senkrecht in das Kassettenfach 10 einsteckbar und dann in Richtung auf die Wandung 5 zu bewegbar ist.

Fig. 2 zeigt den Recorder mit der sich in Spielposition befindlichen Kassette 12. Die Kassette 12 ragt soweit aus dem Kassettenfach 10 heraus, daß sie mit den Antriebsöffnungen die Antriebsdorne 13, mit der Aussparung 21 den Stift 20 und mit der Aufnahmesperrvorrichtung 40 den als Tastschalter ausgebildeten Sensor 41 erfassen kann. Der dem Einstecken der Kassette 12 dienende Raum des Kassettenfaches 10 wird dabei von einer als Rolladen ausgebildeten Schutzabdeckung 78 abgedeckt, die aus dem Gehäuse 1 herausziehbar ist.

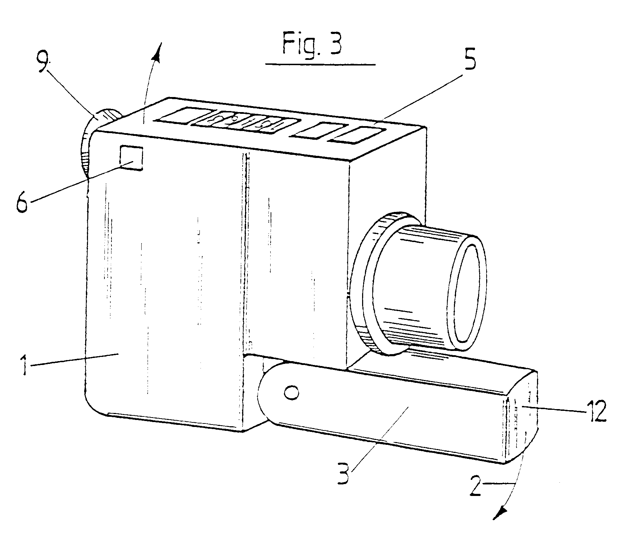

In Fig. 3 ist die klappbare Wandung 5 in der geschlossenen Endstellung dargestellt, wobei die Wandung 5 praktisch das Gehäuse 1 abdichtet. Das Aufklappen der Wandung 5 in die geöffnete Endstellung, also die eigentliche Arbeitsstellung, kann auch durch Wirkung eines Kraftspeichers erfolgen. Beispielsweise wird beim Verschließen der Wandung 5 eine vorgespannte Feder gespannt, und die Wandung 5 rastet ein. Zum Aufklappen wird ein Knopf 6 betätigt, so daß die Feder selbständig und schnell die Wandung 5 in die geöffnete Endstellung klappt. Durch diese Lösung kann die Handhabung weiter vereinfacht und insbesondere die Zeit für die Inbetriebnahme der Recorder verkürzt werden.

Mit der klappbaren Wandung 5 können zusätzlich Schalter gekuppelt sein, die in der geschlossenen Endstellung, also der Ruhestellung, bestimmte Betriebsfunktionen selbsttätig abschalten und in der geöffneten Endstellung selbsttätig einschalten. Dadurch können zusätzliche Handhabungen für die Abschaltung bestimmter Funktionen eingespart und vermieden werden, daß die Abschaltung vergessen wird. Dadurch können Bauteile geschont oder Energie eingespart werden unabhängig davon, ob die Energieversorgung der Recorder vom Netzteil des Recorders aus oder durch eingebaute Batterien bzw. Akkus erfolgt.

Die geöffnete Endstellung der Wandung 5 und die geschlossene Endstellung der Wandung 5 sind vorzugsweise beide als Raststellungen ausgebildet, da praktisch nur die beiden Endstellungen von Bedeutung sind und Zwischenstellungen nicht benötigt werden. Durch Rasten oder durch besondere im Gehäuse 1 verschiebbar gelagerte Stabilisierungstifte 15 kann die Wandung 5 für den Kassettenbetrieb stabilisiert werden. Die Stabilisierungsstifte 15 sind nach dem Klappen der Wandung 5 in die geöffnete Endstellung um eine Teillänge in die Wandung 5 einschiebbar, wobei der Antrieb der Stabilisierungsstifte 15 beispielweise durch einen Speicherbefehl bewirkt werden, der beim Laden der Kassette 12 über den Stift 20 ausgelöst wird. Hierzu ist der Stift 20 mit einem elektrischen Schaltelement entsprechend mechanisch verkuppelt.

Anstelle der Rasten oder der Stabilisierungsstifte 15 können zur Stabilisierung der geöffneten Endstellung der Wandung 5 beispielsweise auch an der Wandung 5 ausgebildete Hebelarme dienen, die durch Riegel feststellbar sind. Ein derartiger Mechanismus ist in Fig. 4a und Fig. 4b dargestellt.

Durch die Stabilisierung wird gewährleistet, daß die Wandung 5 und damit Antrieb und Kassette 12 gegen Verkippen geschützt sind, wenn z. B. der Recorder getragen oder bedient wird.

Fig. 4a zeigt mit Blickrichtung auf das Okular 9 bzw. auf den eingebauten Monitor in Teilschnitten schematisch ein Kassettenfach 10 mit einer als Schlitten ausgebildeten Kassetten-Ladevorrichtung 70, eine herausgeklappte Wandung 5 gemäß Fig. 1-3 mit einer sich in Spielposition befindlichen Kassette 12 und die Kraftübertragung vom Gehäuse 1 auf die Wandung 5, bzw. auf einen der beiden von ihr gehaltenen mit je einem Antriebsdorn 13 versehenen Wickelteller 131. Auf der Innenseite der Wandung 5 sind der Sensor 41, der Stift 20, einer der neiden Wickelteller 131 und der Seitenflügel 60a sichtbar, dessen Rastnasen 61 die Kassette 12 umfassen und dessen Verlängerung 62a den Sensor 41 abdeckt. Mit der Ladevorrichtung 70, die in Fig. 4b perspektivisch dargestellt ist, wird sowohl der Lade- als auch der Entladevorgang der Kassette 12 erleichtert. Diese Ladevorrichtung 70 bedingt jedoch gegenüber dem Kassettenfach 10 gemäß Fig. 1-3 einen größeren Kassettenfachquerschnitt, damit die Wandung 5 im Kassettenfach 10 aufgenommen werden kann, wenn die Wandung 5 in die geschlossene Endstellung geklappt wird. Die Außenseitenfläche 52 der Wandung 5 ist bei dieser zweiten konstruktiven Kombination von Gehäuse 1, Wandung 5 und Kassettenfach 10 so groß ausgeführt, daß sie das Gehäuse 1 abzudichten vermag.

In die Kassette 12 bzw. in das Kassettenfach 10 ragen Fädelelemente zum Ausfädeln des Magnetbandes 122 sowie eine an sich bekannte Kassettenfach-Leuchtdiode 83 hinein. Die Kassettenfach-Leuchtdiode 83 ist mittels eines Trägerelementes auf einem Chassis 80 angeordnet. Die Fädelelemente sind symbolisch durch einen Stift 34 gekennzeichnet. Mittels eines weiteren in das Kassettenfach 10 hineinragenden Stiftes 84, ist die bekannte verriegelbare Bandschutzklappe 120 der Kassette 12 so geklappt, daß für den Aufnahme- und Wiedergabebetrieb des Recorders das Magnetband 122 mit Hilfe der Fädelelemente aus der Kassette 12 ausgefädelt und um eine auf dem Chassis 80 gelagerte drehbare Kopftrommel 82 geschlungen werden kann. Durch die geklappte Bandschutzklappe 120 steht bekannter Weise die Kassettenfach-Leuchtdiode 83 mit einem Bandanfangs- sowie mit einem Bandendsensor durch das Kassettengehäuse hindurch in Sichtkontakt. Die Kassette 12 steckt in der als Schlitten ausgebildeten Ladevorrichtung 70. Die dem Objektiv sowie die dem Okular zugewandte Seite der Ladevorrichtung 70 ist mit mindestens zwei zapfenartigen Gleitelmenten 76 versehen. Über diese Gleitelemente 76 ist die Ladevorrichtung 70 in zwei Führungsschienen 77 horizontal verschiebbar gelagert, die seitlich des Kassettenfaches 10 im Gehäuse 1 angeordnet sind. An jeder der vorgenannten beiden Seiten ist ein Riegel 75 ausgebildet. Diese Riegel 75 stehen mit je einem an der Wandung 5 seitlich ausgebildeten Hebelarm 53 in Eingriff, wodurch die Wandung 5 gegen Verkippen gesichert ist. Die beiden Hebelarme 53 sind an je einem als vorgespannte Zugfeder ausgebildeten Kraftspeicher 84 angekuppelt. Die beiden Kraftspeicher 84 bewirken das Klappen der Wandung 5 in die geöffnete Endstellung. Die Ladevorrichtung 70 bewirkt auch die Führung der Kassette :2, wenn diese in das Kassettenfach 10 eingesteckt wird, wobei eine am Kassettenfachboden fest angeordnete Anschlagsvorrichtung 100 die Einstecktiefe begrenzt und ein als Federelement ausgebildeter, Abtasthebel 73 (Fig. 4b) die Bandschutzklappe 120 entriegelt. An der Ladevorrichtung 70 ist eine als Rolladen ausgebildete Schutzabdeckung 78 für den Teil des Kassettenfaches 10 angekuppelt, der sonst offen wäre. Die Schutzabdeckung 78 wird durch zwei vorgespannte Zugfedern 79 gespannt gehalten. Diese ziehen beim Entladevorgang der Kassette 12 die Schutzabdeckung 79 in das Gehäuse 1 ein und unterstützen dabei den Entladevorgang. Zwischen Wickelteller 131 und Antriebsseite der Kassette 12 sind die in der Beschreibung der Fig. 1 erwähnten Gleitrollen 65 an dem Auswurfarm 64 des Seitenflügels 60a erkennbar.

Ein im Gehäuse 1 gelagerter, elektronisch steuerbarer Motor 81, der z. B. ein außerhalb der Kassette 12 gelegener auf dem Chassis gelagerter Bandantriebsmotor (Capstanmotor) sein kann, treibt über ein mit seiner Motorwelle festverbundenes Antriebsrad 30 einen Riemen 31 an, der die Antriebskräfte auf ein in der Wandung 5 drehbar gelagertes Antriebsrad 32 überträgt. Das Antriebsrad 32 treibt seinerseits über ein Zwischenrad 37 ein Schwenkrad 38 an. Das Antriebsrad 32 und das Zwischenrad 37 weisen eine gemeinsame Achse auf, um welche mit Hilfe eines Schwenkarms 36 das Schwenkrad 38 schwenkbar ist und hierdurch mit dem einen oder dem anderen der beiden Wickelteller 131 in Eingriff gebracht werden kann. Schwenkrad 38, Zwischenrad 37, Antriebsrad 32 und Schwenkarm 36 bilden somit ein Schwenkgetriebe zum wechselweisen Antrieb der beiden Wickelteller 131. Der Riemen 31 ist mit zwei Umlenkrollen 39 in Eingriff, die im Gehäuse 1 so angeordnet sind, daß der Riemen 31 einer Schwenkbewegung der über das Schaniers 8 mit dem Gehäuse 1 verbundenen Wandung 5 stets sicher folgen kann.

Anstelle des Riementriebes bzw. der Übertragung der Antriebskräfte vom Gehäuse 1 aus auf die Wandung 5 kann auch ein das Antriebsrad 32 direkt antreibender Motor verwendet werden.

Fig. 4b zeigt die sich mit der Wandung 5 in Eingriff befindliche Kassetten-Ladeeinrichtung 70. Die Ladeeinrichtung 70 weist einen Rahmen 71 für die Aufnahme der Kassette 12 auf. Innerhalb des Rahmens 71 sind seitlich je ein Federelement 72 angeordnet. Durch die Federelemente 72 kann die Kassette 12 in der Ladeeinrichtung 70 reibschlüssig gehalten werden. Der Rahmen 71 wird seinerseits von zwei Seitenteilen 74 gehalten, an denen die erwähnten Riegel 75 ausgebildet sind, und die mit den erwähnten zapfenförmigen Gleitelementen 76 versehen sind.

Die Wandung 5 besitzt eine Ausnehmung 54 für die auf dem Chassis 80 angeordnete Kassettenfach-Leuchtdiode 83. An der Innenseite der Wandung 5 sind ein Wickelteller 131 und der in der Beschreibung der Fig. 1 erwähnte nach außen hin schwenkbare Seitenflügel 60b mit seinem Auswurfhebel 64 erkennbar. Die Lage der Schwenkachse ist auf der Innenseite der Wandung 5 durch eine gestrichelte Linie 66 angedeutet. Der auf dem Wichelteller gelagerte Antriebsdorn ist durch einen Zapfen 13 gekennzeichnet.

Fig. 4a und Fig.4b läßt erkennen, daß die Verriegelung der Wandung 5 in der geöffneten Endstellung, über die Ladevorrichtung 70 und die mit den beiden Seitenflügeln 60a, 60b in Eingriff stehende Kassette 12 gesichert wird.

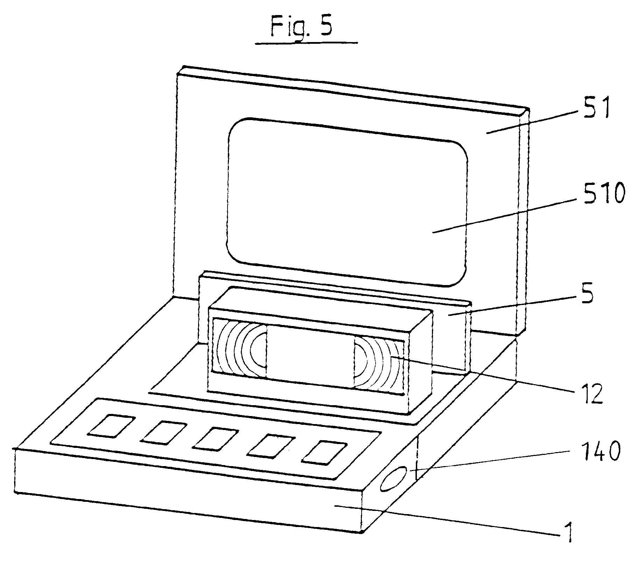

Fig. 5 zeigt einen Videorecorder mit einem Gehäuse 1, mit einer klappbaren Wandung 5 gemäß Fig. 1-3 oder Fig. 4a-4b und mit einer zweiten klappbaren Wandung 51, deren Innenseite mit einem sogenannten LCD-Bildschirm (liquid crystal display) 510 zur Wiedergabe von auf Magnetbandkassette aufgezeichneter oder von einer Kamera aufgenommener oder von mittels einer Empfangseinrichtung empfangener Fernsehbilder versehen ist. Dieser Bildschirm kann Teil eines Fernsehwiedergabegerätes hoher Qualität sein, um Aufnahmen des HDTV-, HD-MAC-, Super-VHS- oder dergleichen geeigneten Recorders (oder Kamera) mit der entsprechenden Qualität wiedergeben zu können. Eine Eingangsbuchse ermöglicht den Anschluß einer Empfangsantenne. Eine Ausgangsbuchse (SCART oder dergleichen) ermöglicht den Anschluß eines Monitors mit Grobbildschirm. Die Wandung 51 ist so ausgebildet und angeordnet, daß das Fernsehbild auch bei eingesteckter Kassette 12 sichtbar ist. Das Gehäuse 1 des Recorders kann eine Videokamera 140 fest oder entnehmbar enthalten.

Die Erfindung ist insbesondere für VHS-Camcorder geeignet, die mit sogenannten "Normal"-Kassetten arbeiten. Diese besitzen im Vergleich zu der "Mini"-Ausführung, die unter der Bezeichnung "VHS-C Kassette" bekannt ist, eine erheblich größere Spieldauer.

## Patentansprüche

1. Videorecorder mit einem Gehäuse (1), das eine klappbare Wandung (5) aufweist, die in einer als Raststellung ausgebildeten ersten Endstellung das Gehäuse (1) verschließt und in einer zweiten Endstellung ein Kassettenfach (10) für eine Videokassette (12) freigibt, wobei die Wandung (5) in der zweiten Endstellung eine solche Lage einnimmt, daß die Videokassette (12) in das Kassettenfach (10) einsteckbar ist, und daß an der dem Kassettenfach (10) zugewandten Seite der Wandung (5) zwei wechselweise antreibbare Antriebsdorne (13) für die Magnetbandwickel (121) der Videokassette (12) angeordnet sind, dadurch gekennzeichnet, daß in der Wandung (5) ein Schwenkgetriebe angeordnet ist, mittels welchem, in Abhängigkeit von der Wickelrichtung für die Magnetbandwickel (121), entweder der eine oder der andere Antriebsdorn (43) antreibbar ist, und daß die zweite Endstellung der Wandung (5) als Raststellung ausgebildet ist und zugleich Betriebsstellung des Videorecorders für den Aufnahme-und Wiedergabebetrieb mit der Videokassette (12) ist.

2. Recorder nach Anspruch 1, **dadurch gekennzeichnet,** daß im Gehäuse (1) Stifte (15) verschiebbar gelagert sind, die in der geöffneten Endstellung der Wandung (5) um eine Teillänge in die Wandung (5) einschiebbar sind und diese gegen Verschwenkung sichern.

3. Recorder nach Anspruch 1, **dadurch gekennzeichnet,** daß die Wandung (5) in der geöffneten Endstellung durch Riegel (75) gegen Verschwenkung gesichert wird.

4. Recorder nach Anspruch 3, **dadurch gekennzeichnet,** daß die Riegel (75) an einer Kassetten-Ladeeinrichtung (70) ausgebildet sind und mit dem Laden der Kassette (12) die Wandung (5) verriegeln und mit dem Entladen der Kassette (12) die Wandung (5) entriegeln.

5. Recorder nach Anspruch 1, **dadurch gekennzeichnet,** daß zum Antrieb der Wickelteller (131) über das Schwenkgetriebe ein im Gehäuse (1) angeordneter elektronisch steuerbarer Motor (81) verwendet wird.

6. Recorder nach Anspruch 5, **dadurch gekennzeichnet,** daß zwischen Motor (81) und Schwenkgetriebe ein Umlenkgetriebe in Eingriff ist, das im Bereich eines die Wandung (5) und das Gehäuse (1) miteinander verbindenden Scharniers (8) angeordnet ist.

7. Recorder nach einem der Ansprüche 1 - 6, **dadurch gekennzeichnet,** daß das Gehäuse (1) eine Fernsehkamera (140) beinhaltet.

## Claims

1. Video recorder having a body (1) with a hinged wall (5) which in a first end position, designed as a locking position, closes the body (1) and in a second end position opens a cassette compartment (10) for a video cassette (12), the wall (5), and the second end position, occupying a location such that the video cassette (12) can be inserted into the cassette compartment (10), and such that two alternately drivable drive hubs (13) for the magnetic tape reels (121) of the video cassette (12) are located on that side of the wall (5) which faces the cassette compartment (10), characterised in that a turning gear is installed in the wall (5), said transmission enabling either the one or the other drive hub (13) to be driven, depending on the winding direction for the magnetic tape reels (121), and in that the second stop position of the wall (5) is designed as a locking position and is at the same time the position for operating the video recorder with the video cassette (12), for recording and playback operation.

2. Recorder according to Claim 1, characterised in that pins (15) are mounted in the body (1) in a manner such that they can slide and, with the wall (5) in the opened end position, they can be pushed into the wall (5) for part of their length, securing it so that it cannot be swung out of position.

3. Recorder according to Claim 1, characterised in that the wall (5) is secured in the opened end position by means of locking bolts (75), so that it cannot be swumg out of position.

4. Recorder according to Claim 3, characterised in that the locking bolts (75) are formed on a cassette loading device (70), and lock the wall (5) as the cassette (12) is loaded, and unlock the wall (5) as the cassette (12) is unloaded.

5. Recorder according to Claim 1, characterised in that an electronically controllable motor (91) is employed for driving the winding discs (131) via the turning gear, said motor (81) being installed in the body (1).

6. Recorder according to Claim 5, characterised in that a direction-changing transmission means acts between the motor (81) and the turning gear, said direction-changing transmission means being installed in the vicinity of a hinge (8) which interconnects the wall (5) and the body (1).

7. Recorder according to any one of Claims 1-6 characterised in that the body (1) contains a television camera (140).

## Revendications

1. Magnétoscope avec un bâti (1) qui présente une paroi rabattable (5) qui ferme le bâti (1) dans une première position extrême configurée comme position à encoche et qui libère un casier pour cassette (10) pour une cassette vidéo (12) dans une seconde position extrême, la paroi (5) prenant, dans la seconde position extrême, une telle position que la cassette vidéo (12) peut être encastrée dans le casier pour cassette (10) et que deux mandrins d'entraînement (13) pour les enroulements de bande magnétique (121) de la cassette vidéo (12), qui peuvent être entraînés en alternance, sont placés sur la face de la paroi (5) qui est tournée vers le casier pour cassette (10), **caractérisé en ce** qu'un mécanisme de pivotement est placé dans la paroi (5) au moyen duquel soit l'un ou l'autre mandrin d'entraînement (13) peut être entraîné en fonction du sens d'enroulement des enroulements de bande magnétique (121) et que la seconde position extrême de la paroi (5) est configurée comme position à enchoche et est en même temps la position de fonctionnement du magnétoscope pour le mode d'enregistrement et de reproduction avec la cassette vidéo (12).

2. Magnétoscope selon la revendication 1, **caractérisé en ce** que des chevilles (15) sont positionnées en étant mobiles dans le bâti (1), chevilles qui peuvent être glissées dans la paroi (5) d'une partie de la longueur dans la position extrême ouverte et que celles-ci bloquent contre le pivotement.

3. Magnétoscope selon la revendication 1, **caractérisé en ce** que la paroi (5) est bloquée contre le pivotement par des verrous (75) dans la position extrême ouverte.

4. Magnétoscope selon la revendication 3, **caractérisé en ce** que les verrous (75) sont configurés sur un dispositif de chargement de cassettes (70) et qu'ils bloquent la paroi (5) lors du chargement de la cassette (12) et qu'ils déverrouillent la paroi (5) lors du déchargement de la cassette (12).

5. Magnétoscope selon la revendication 1, **caractérisé en ce** qu'un moteur (81) commuté électroniquement, qui est placé dans le bâti 1, est utilisé pour l'entraînement des plateaux d'enroulement (131) par le dispositif de pivotement.

6. Magnétoscope selon la revendication 5, **caractérisé en ce** qu'un mécanisme de renvoi est en prise entre le moteur (81) et le mécanisme de pivotement, mécanisme de renvoi qui est placé dans la zone d'une charnière (8) qui relie la paroi (5) et le bâti (1) l'un à l'autre.

7. Magnétoscope selon l'une des revendications 1 à 6, **caractérisé en ce** que le bâti (1) contient une caméra de télévision (140).
